# EUROPEAN PATENT APPLICATION

(11) **EP 4 763 398 A1**
(43) Date of publication of application: **24.06.2026**
(21) Application number: 24220965.8
(22) Date of filing: 18.12.2024
(51) Int. Cl.: B23K 26/064, B23K 26/38, G02F 1/11, G02F 1/33

(54) **LASER PROCESSING HEAD, LASER CUTTING MACHINE, AND METHOD**

(71) Applicant: Bystronic Laser AG, 3362 Niederönz (CH)
(72) Inventor: HAAS, Titus, 4805 Brittnau (CH); SCHWIND, Tobias, 3360 Herzogenbuchsee (CH); SCHEIDIGER, Simon, 4900 Langenthal (CH)
(74) Representative: Frei Patent Attorneys

(57) **Abstract**

A laser processing head (10) for a laser processing machine, such as a laser cutting machine, for example a flatbed laser cutting machine, or for a laser welding machine, is provided. The laser processing head (10) is equipped to emit laser radiation towards a workpiece (12) supported by a workpiece support and to move relative to the workpiece support. For the laser radiation, the laser processing head comprises an input port (51) for receiving the laser radiation from a laser source and an output port for emitting the laser radiation towards the workpiece. The laser beam path from the input port to the output port leads through a space (53) filled by a gas. The laser processing head is equipped to cause a periodic density modulation of a density of the gas in the space through which the beam path leads, so as to deflect a portion (42) of the laser beam by acousto-optic modulation.

## Description

The invention is in the field of laser processing machines, especially laser cutting machines, such as flatbed laser cutting machines. More in particular, it relates to a laser processing head, a laser processing machine, and a method of operating a laser processing machine.

Depending on the workpiece type (geometry, thickness, material etc. may vary) and on the processing technique (laser cutting vs. laser welding), as well as depending on the desired result (maximum speed or optimized cut/weld quality), the optimum laser beam properties may vary. Often, the laser beam imaging properties of laser processing heads are constant and based on a compromise between different requirements. In recent years, several laser processing head manufacturers have started to work with zoom optics for adapting the spot size to the respective application. Moreover, the concept of dynamic beam shaping has been developed in which the beam is subject to high frequency deflection so that different intensity distributions and temperature distributions in the processing zone can be achieved. However, for doing so, the prior art requires transmissive and/or reflective optical elements that influence the laser beam, for example by movable lenses and/or mirrors. Such transmissive or reflective optical elements are susceptible to contamination. Given the ever-increasing achievable laser powers, this is susceptibility to be avoided, however, because contamination may result in uncontrolled heating of the components and could even lead to destruction.

US 2023/271273 A1 proposes to use an acousto-optic modulator for diffracting the laser beam of a laser apparatus for pulsing the laser beam. Acousto-optic modulators have a transparent solid medium (crystal or glass) into which a standing acoustic wave is coupled to generate a temporary periodic grating. Acousto-optic modulators, therefore, need not be mounted to be movable. However, they share the above-described disadvantage of being susceptible to contamination. Also, acousto-optic modulators are not suited for transmitting and deflecting high power laser beams but have an upper limit for the laser radiation of a few tens of Watts. They are, therefore, not suitable as elements in laser processing heads of modern laser processing machines that need to generate much higher laser powers.

It is therefore an object of the present invention to provide a laser processing head, a laser processing machine and a method that overcome drawbacks of the prior art and that serve for influencing, especially dynamically influencing, the laser beam emitted by a laser processing head.

According to an aspect of the invention, a laser processing head for a laser processing machine, such as a laser cutting machine, for example a flatbed laser cutting machine, or for a laser welding machine, is provided. The laser processing head is equipped to emit laser radiation towards a workpiece supported by a workpiece support and to move relative to the workpiece support. For the laser radiation, the laser processing head comprises an input port for receiving the laser radiation from a laser source and an output port for emitting the laser radiation towards the workpiece. The laser beam path from the input port to the output port leads through a space filled by a gas. The laser processing head is equipped to generate a periodic density modulation of a density of the gas in the space through which the beam path leads, so as to deflect a portion of the laser beam. Such deflection occurs if the laser beam meets a density modulation - and as a consequence a modulation of the index of refraction - due to the physical principle of acousto-optic modulation.

The periodic density modulation of the gas results in a periodic modulation of the index of refraction, and thereby it constitutes a diffraction grating for the laser beam. The density, and correspondingly the refractive index of the gas, is influenced by the parameters for generating the sound wave (phase shift, amplitude, frequency). The diffraction grating is oriented such that planes of equal pressure are not parallel to the laser beam but at a nonzero angle, also called "angle of incidence" in the present text.

Deflection by a density modulation of a gas has the substantial advantage over the prior art that no reflective or transparent solid element is required. Thus, the medium that causes the deflection (the gas vs. the reflective or solid transparent element of prior art solutions) cannot become stained by splatters of workpiece material or by a workpiece material vapor or similar. Further, there is less absorption in the material than for solid reflective or transparent materials, so that the tendency of the laser processing head to heat up too much is reduced even if the laser powers are very high.

Diffraction of electromagnetic radiation by a diffraction grating will result in only a portion of the incident radiation being diffracted, whereas a further portion is transmitted without any deflection (zero order diffraction). Also, the diffracted radiation is split among a first order diffracted portion and higher-order diffracted portions, the intensity of the latter being much smaller than the intensity of the first-order diffracted portion. In embodiments, the laser processing head is equipped to direct the non-deflected portion on the workpiece together with the deflected portion (first-order diffraction; the intensity of higher order diffracted portions may be negligible so that, depending on geometrical constraints, such higher-order diffracted portions may get to the workpiece or not, both being acceptable).

Considerations about deflections achievable by periodic density modulations by standing or travelling acoustic waves and about how high shares of first-order diffracted radiation can be achieved can be found in Y. Schrödel et al., Nature Photonics 18, 54-59 (2024).

The periodic density modulation may especially be an acoustic, in particular ultrasonic, wave emitted into the space. For generating the acoustic wave, the laser processing head may comprise at least one acoustic wave generator, such as an ultrasonic generator. Ultrasonic generators, usually using the piezoelectric effect, are known in the art and commercially available.

In many embodiments, the acoustic (ultrasonic) waves are standing waves. To generate a standing wave, the laser processing head according to a first possibility comprises an acoustic reflector arranged along the propagation direction of the acoustic wave emitted by an acoustic wave generator (especially ultrasonic generator) and oriented to reflect the acoustic wave back towards the acoustic wave generator. According to a second possibility, the laser processing head comprises a pair of acoustic wave generators arranged along the propagation direction of radiation emitted by the other acoustic wave generator so that the acoustic wave generator generates a standing acoustic, especially ultrasonic wave.

In alternative embodiments, the periodic density modulation is a travelling acoustic wave.

In the present text, an acoustic wave generator together with an assigned reflector or a pair of acoustic wave generators assigned to each other or also a single acoustic wave generator for generating a travelling ultrasonic wave in the text is called an acoustic wave generating unit.

Also combinations of these possibilities are feasible if more than one wave generating units is used, as explained hereinafter, i.e., the laser processing head may for example comprise a wave generating unit of an acoustic wave generator and an acoustic reflector, and in addition may comprise a further wave generating unit of a pair of acoustic wave generators, etc.

The gas filling the space may be air, for example air at ambient pressure. Alternatively, the gas may be a dedicated gas, for example optimized for its acoustic properties. For example such dedicated gas may be chosen from the group comprising Helium, Neon, Nitrogen, Oxygen, Carbon Dioxide, Air, Argon. Comparably lighter gases like for example Helium, but also, in comparison to air, Neon, have the property of having a lower density and a higher sound velocity (for example in Helium, the sound velocity is 1005 m/s compared to 343 m/s of air), which makes the efficient generation of density modulations by sound easier. Heavier gases, like for example Argon, in contrast have the advantage of yielding shorter sound wavelengths, thus shorter spatial density periodicities, for a given sound source frequency - shorter periodicities tendentially lead to stronger deflections.

The gas filling the space may also be an assist gas that is emitted towards the position of incidence of the laser processing beam onto the workpiece and that in addition fills the housing of the laser processing head.

In embodiments, the laser processing head is equipped to generate, in the gas-filled space traversed by the laser beam, acoustic waves having different directions, i.e., it is equipped to adapt the direction of the acoustic wave. The direction of the acoustic wave defines the direction of deflection, whereby acoustic waves having different directions cause deflections into different directions.

In a first group of these embodiments, in which the laser processing head is equipped to deflect the laser beam into different directions, different directions may be caused by the acoustic wave generating unit being movable relative to other parts, such as a housing, of the laser processing head. Such movement may be a rotary movement around an axis, which axis may approximately correspond to the location of the laser beam. For example, the wave generating unit or wave generating units may be mounted to a hollow shaft motor (or more than one or more hollow shaft motors), with the laser beam path leading through the hollow shaft of the hollow shaft motor(s).

In a second group of embodiments, the laser processing head comprises a plurality of acoustic wave generating units oriented into different directions and is equipped to activate them selectively.

If the laser processing head moves relative to the workpiece, it may move into different directions, for example for making a controlled cut in the workpiece to cut out shapes from the workpiece, or for following a contour along which parts of a workpiece are to be welded to each other. In embodiments the direction of deflection is adapted to the movement, for example by ensuring that the deflection relative to the workpiece remains longitudinal (i.e., into the plus or minus movement direction), or that it is transversal with respect to the movement direction, etc.

Thus, a control of the laser processing machine may for example be equipped and configured for orienting the deflection relative to a direction of movement - such as a cutting direction - of the laser processing head relative to the workpiece.

The fact that the control is 'equipped and configured' to orient the deflection in a particular direction means that the laser processing machine would not only be suitable for this but that contains hard- und software that may actively initiate the laser processing machine to achieve this kind of deflection if this function is activated.

In addition or as an alternative to reacting to changes of a movement direction of the laser processing head, the direction of deflection may also be varied for dynamic beam shaping. Consequently, the control may, in addition or as an alternative, be equipped and configured to implement dynamic beam shaping to achieve a particular beam shape when such beam shaping function is activated. The dynamic beam shapes may be generated according to approaches known per se. In addition or as an alternative, dynamic beam shaping may involve fast and for example continuous movement, for example the beam circling around a center position. An oscillation of the focal point to increase the beam diameter is for example taught in EP3 746 254 B1, where such oscillation is achieved by an oscillating lens. In the context of the present invention, for example a continuous rotation of the wave generating unit may be used for this purpose. As another example, EP 4 392 200 B1 discloses approaches how a control unit can be configured to dynamically shape the laser beam for different cutting segments (such as straight lines, circles, corners, curves, pierce-ins or pierce-outs, lead-ins or lead-outs, engravings). WO 2023/072845 A9 teaches to do so for transition phases between consecutive specific dynamic laser beam shapes.

In a group of embodiments, the laser processing head comprises a plurality of acoustic wave generating units arranged in sequence. Such arrangement in sequence means that the wave generating units may be activated such that the laser beam passes the acoustic waves generated by them one after the other so that the laser beam is subject to a number of deflections corresponding to the number of wave generating units in sequence. By a sequence of wave generating units, the achieved deflection angle can be increased, namely by again deflecting the already deflected beam portion. In embodiments, the laser processing head comprises two wave generating units in sequence.

The wave generating units in sequence can for example be synchronously moved if the direction of deflection is to change. In an example, the wave generating units in sequence can be mounted to a common motor, such as a common hollow shaft motor. Alternatively, the wave generating units can be movable independently of each other, for example by each being mounted to an own dedicated motor. Thereby, more complex deflection and movement patterns can be achieved.

Also for embodiments of the above-described second group of embodiments, in which the laser processing head comprises a plurality of acoustic wave generating units oriented into different directions and is equipped to activate them selectively for deflecting into different directions, a sequence of deflections may be achieved. To this end, a stack of two (or more) groups of acoustic wave generating units oriented into different directions may be used, the laser beam directed between the acoustic wave generating units so that it passes the groups one after the other. Also combinations are feasible, in which a movable wave generating unit and a group of acoustic wave generating units oriented into different directions are passed sequentially.

In a group of embodiments, the laser processing head is free from transparent solid-state (or liquid) elements through which the laser beam is transmitted, i.e., especially free of lenses or similar, with the possible example of an optional protective glass that may be thin and that isolates an interior of the laser processing head from the processing zone. This does not exclude reflective elements such as mirrors, especially slightly curved mirrors, that deflect the laser beam inside the laser processing head and that may have a focusing effect.

The invention also concerns a laser processing machine. The laser processing machine has a laser processing head as described in the present text, as well as a laser source for generating laser radiation to be coupled into the input port, a workpiece support, a mechanism for moving the laser processing head relative to the workpiece support and a control. The control, in addition to controlling a movement of the laser processing head relative to the workpiece support and to controlling an emission of the laser beam, is equipped and configured to cause and control a generation of the periodic density modulation - especially by activating at least one acoustic wave generator.

The control may especially be equipped and configured to adapt a direction of a generated acoustic wave to a direction of movement of the laser processing head relative to the workpiece.

The invention moreover concerns a method of operating a laser processing machine as described in this text. The method comprises the steps of generating the laser beam, directing the laser beam through the gas-filled space, generating the periodic density modulation in the gas-filled space so that a portion of the laser beam is deflected by the periodic density modulation acting as diffraction grating

Hereinafter, embodiments of the present invention are described in more detail referring to drawings. In the drawings, same reference numbers refer to same or similar components. The drawings are schematical. They show:
- Fig. 1:: a flatbed laser cutting machine;
- Fig. 2: the principle of deflecting a laser beam by an acoustic wave being a standing wave between an ultrasonic generator and an acoustic reflector;
- Fig. 3: an arrangement of a pair of ultrasonic sound generators;
- Fig. 4: a laser processing head with a workpiece;
- Fig. 5: a detail of a laser processing head, with a movable ultrasonic wave generating unit;
- Fig. 6: the principle of arranging two ultrasonic wave generating units in sequence, wherein the ultrasonic wave generating units are movable independent of each other;
- Fig. 7: the principle of arranging two synchronously movable ultrasonic wave generating units in sequence;
- Figs. 8 and 9: the principle of achieving a deflection into different directions by a plurality of acoustic wave generating units oriented into different directions;
- Fig. 10: a detail of a laser processing head with a stack of two groups of acoustic wave generating units oriented into different directions;
- Fig. 11: a schematic top view on a workpiece in which a cut is generated, without deflection (left panel) and with (right panel) deflection of the laser beam in the plus cutting direction;
- Fig. 12: a top view on a workpiece in which a cut is generated, with dynamic beam forming, without additional deflection (left panel) and with (right panel) additional deflection of the laser beam in the plus cutting direction;
- Fig. 13: a configuration of a laser processing head and a workpiece in which the laser processing head is oriented for bevel cutting; and
- Fig. 14: a laser processing head comprising a deflection module, together with a workpiece.

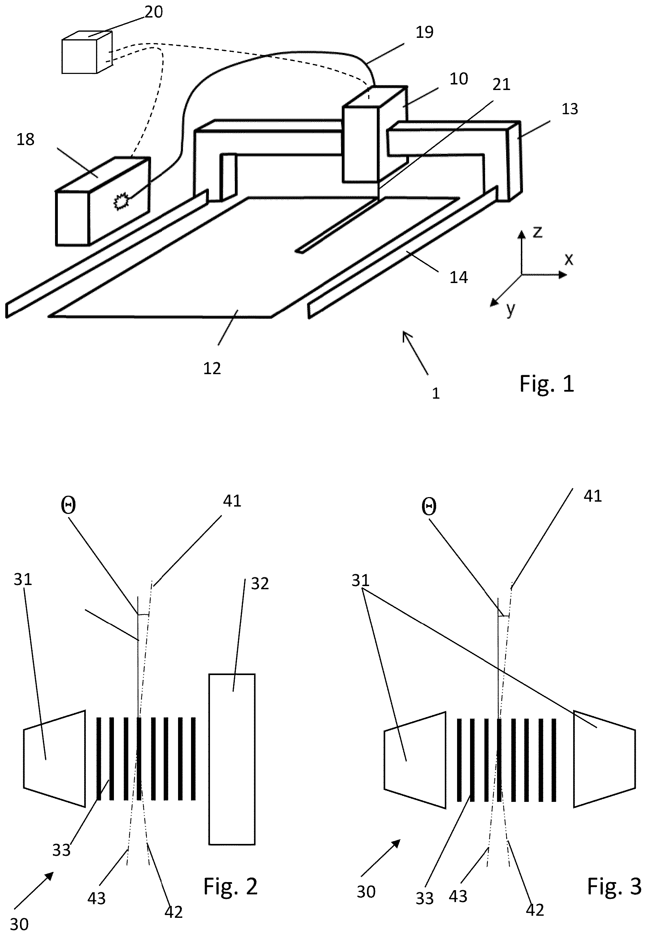

**Figure 1** shows a laser cutting machine 1 being an example of a laser processing machine. The laser cutting machine comprises a laser source 18 and a transport fiber 19, a laser processing head 10, and a laser head moving mechanism. A workpiece 12 is supported by a workpiece support. The laser processing head moving mechanism comprises a bridge 13 relative to which the laser processing head 10 is movable in a first horizontal dimension (x dimension), and which itself is movable, for example on a pair of rails 14, in a second horizontal dimension (y dimension) relative to the workpiece support and the workpiece 12. The laser processing head 10 may optionally in addition be movable in a vertical dimension (z dimension) towards and away from the workpiece support. The laser processing head 10 may in addition or as an alternative also be movable to be tilted relative to the vertical orientation schematically depicted in Fig. 1, as explained in more detail hereinafter.

The workpiece 12 may be a metal sheet that is cut by a laser beam 21 emitted by the laser processing head 10. The processing laser beam 21 emitted by the laser processing head 10 will generally propagate into a downward direction, thus a direction towards the workpiece, either strictly vertically, or, for bevel cutting, at a nonzero angle to the direction perpendicular to the workpiece (thus to the strictly vertical (-z) direction). In embodiments, as discussed in more detail hereinafter, the processing laser beam 21 may comprise more than one processing laser beam portions propagating into slightly different downward directions, i.e., being at a small angle with respect to each other.

Fig. 1 also illustrates a machine control 20 that controls, among other things, the movement of the laser processing head relative to the workpiece support and controls the laser source 18 as well as the ultrasonic generators 31 and, if applicable, the motors integrated in the laser processing head 10, as explained in more detail hereinafter.

**Figure 2** shows the principle of deflecting an incident laser beam 41 by a standing (high-pressure) ultrasonic wave 33 if the angle of incidence θ is different from zero (i.e., if the laser beam is not parallel to the wavefronts/standing wave nodes). In Fig. 2, reference number 44 shows the plane parallel to the wavefronts, thus the plane parallel to the standing wave nodes in the depicted embodiment, and θ denotes the angle of incidence θ with respect to this plane 44. Fig. 2 illustrates an ultrasonic generator 31 together with a reflector 32 so that the ultrasonic waves 33 generated by the ultrasonic generator 31 are incident perpendicularly on them (the reflector is parallel to the wavefronts) so that a standing ultrasonic wave 33 is generated between the ultrasonic generator 31 and the reflector 32. The ultrasonic wave 33 is a periodic density modulation and hence a modulation of the index of refraction. Thereby, it constitutes a grating causing diffraction of the incident laser beam 41. Fig. 2 shows a deflected portion 42 (first order diffraction) as well as a non-deflected portion 43 (zeroth order diffraction). The angle between the deflected portion 42 and the non-deflected portion depends on the angle of incidence θ as well as the wavelengths of the ultrasonic wave 33 and of the laser radiation and is shown exaggeratedly in the figures.

The reflector 32 is optional. As for example shown in Y. Schrödel et al., Nature Photonics 18, 54-59 (2024), also the density modulations caused by travelling acoustic (ultrasonic) waves can be sufficient for causing a significant deflection.

Instead of a reflector 32 - or instead of using a travelling ultrasonic wave - an arrangement for causing the periodic density modulation may comprise a further ultrasonic generator 31. The ultrasonic generators of such a pair of ultrasonic generators 31 may, as illustrated in **Figure 3****,** arranged opposite each other so that so that the ultrasonic waves generated by the ultrasonic generators 31 are incident perpendicularly on the respective other ultrasonic generator of the pair, whereby the ultrasonic generators together cause a standing ultrasonic wave 33, potentially of even higher intensity.

An ultrasonic generator 31 together with an assigned reflector 32 (Fig. 2) or a pair of ultrasonic generators 31 assigned to each other (Fig. 3) or also a single ultrasonic generator for generating a travelling ultrasonic wave constitutes an ultrasonic wave generating unit 30.

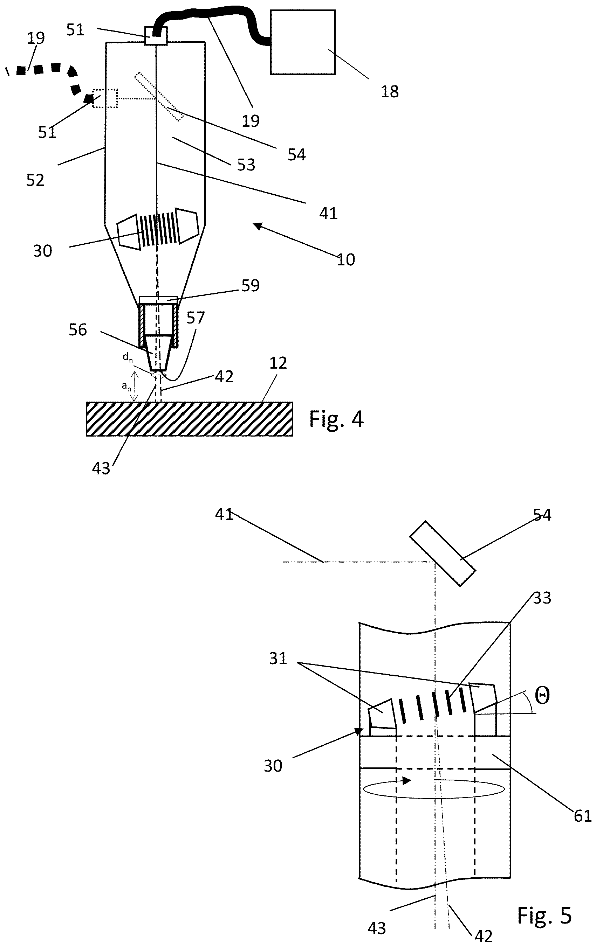

**Figure 4** schematically illustrates a laser processing head 10 with a housing 52 and an interface for the transport fiber 19 that serves as an input port 51. The radiation travels from the input port 51 to an outlet orifice 57 of a nozzle 56, the outlet orifice serving as output port of the laser processing head 10. At least a portion of the path from the input port to the output port leads through a gas-filled space 53 within the laser processing head 10. The gas filling this gas-filled space 53 may be air or may be a dedicated gas, for example optimized for its acoustic properties. It may in addition or as an alternative comprise assist gas that is ejected by the nozzle for assisting the processing of the workpiece 12. Such assist gas, if it is different from air, may for example be Nitrogen or Argon or Oxygen (the latter for flame cutting) or a gas mixture.

As is shown by dotted lines in Fig. 4, as an alternative to being entirely free from solid-state optical elements interacting with the laser beam between the input port and the output port, the laser processing head may comprise one or more of such optical elements, such as a deflection mirror 54 that may be needed depending on the location of the interface with the transport fiber 19 (the input port 51). In embodiments, a deflection mirror may be non-planar and for example used for focusing the laser beam by being appropriately curved. In embodiments, the laser processing head is entirely free from transmissive solid-state optical elements, such as transmissive solid-state lenses.

Fig. 4 illustrates a single ultrasonic wave generating unit 30 for deflecting the laser beam 41. The achieved deflection depends on the achieved deflection angle between the deflected portion 42 and the non-deflected portion 43 as well as on the position of the ultrasonic wave generating unit 30 in the laser processing head 10 and on the distance aₙ between the outlet orifice 57 and the workpiece 12. It is not excluded that the position of the ultrasonic wave generating unit 30 within the laser processing head 10 is adjustable, for example by a translation along the z axis.

In the shown embodiment, both, the deflected portion 42 and the non-deflected portion 43 of the laser radiation are incident on the workpiece 12 and thereby together constitute the processing laser beam 21 (as shown in Fig. 1) and are used for the laser processing so that the overall efficiency is maximized. It is an option, though, to block the non-deflected portion 43 so as to prevent it from being incident on the workpiece 12, especially for applications in which a high precision is desired. There will also be higher-order deflections (not illustrated in the figures) that have a smaller intensity and that may or may not be incident on the workpiece.

The direction into which the laser beam is to be deflected to constitute the laser processing beam 21 depends on the desired beam form. In some embodiments of laser beam cutting, the deflection may for example be in the plus- or minus cutting direction. As the laser processing beam 21 progresses to make a desired cut, this direction may be subject to changes. Accordingly, the direction of the deflection may change also. In addition or as an alternative, dynamic beam shaping may involve fast and for example continuous movement, for example the beam circling around a center position.

Fig. 4 also illustrates a protective glass 59 that shields the interior of the laser processing head from the processing zone. Such protective glass may be thin and readily exchangeable.

**Figure 5** schematically illustrates an ultrasonic wave generating unit 30 mounted to a hollow shaft motor 61 that may be used both, for discrete movements, for example for adaptation to a direction change and for continuous rotation.

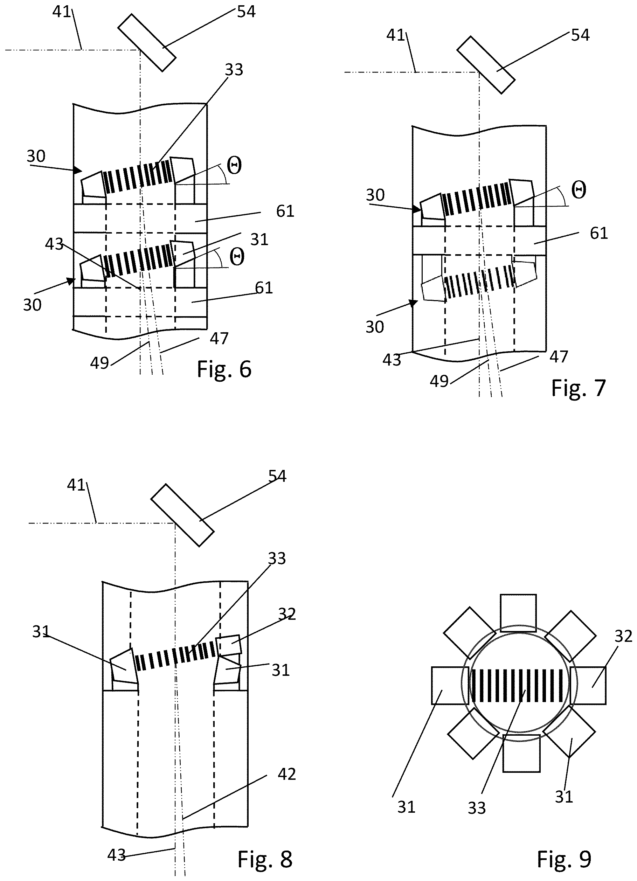

The deflection by the periodic density modulation is limited, especially since the wavelength of the ultrasonic wave cannot be arbitrarily small. Rather, there are certain physical constraints - especially sound absorption in air or other gases - that may limit the ultrasound frequency to acoustic frequencies to values below a few Megahertz for practical applications, as for example explained in the hereinbefore-mentioned paper by Schrödel et al. Therefore, it may be desirable to have an arrangement of a plurality of ultrasonic wave generating units 30 arranged in sequence, whereby one wave generating unit 30 is passed by the laser beam after the other. This is illustrated in **Figure 6** and in **Figure 7****.** Every ultrasonic wave generating unit 30 generates a deflected portion and a non-deflected portion (in addition to higher order deflections, which, however, in most set-ups have only a small intensity and are neglected throughout the present description) per incident beam so that every ultrasonic wave generating unit 30 doubles the beam. In the figures, in addition to the twice deflected portion 47 and the non-deflected portion 43, only one example of a once deflected portion 49 is illustrated, however. In the embodiment of Fig. 6, each ultrasonic wave generating unit 30 has a separate hollow shaft motor 61 so that the direction of the first deflection and the direction of the second deflection can be chosen independently of each other, whereas in the embodiment of Fig. 7, the wave generating units 30 are mounted on a common hollow shaft motor 61.

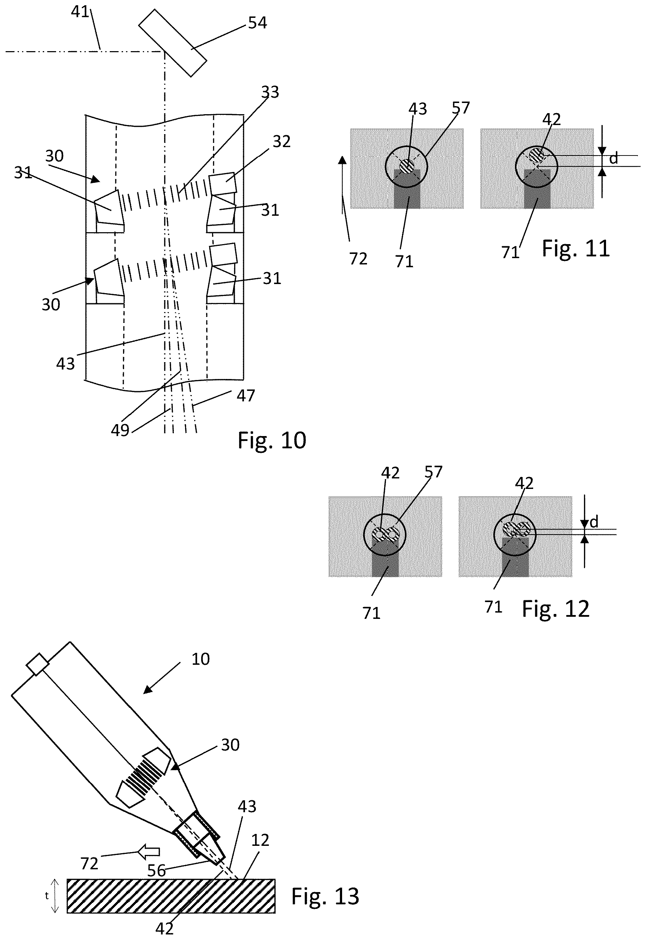

Instead of an actuator - such as the illustrated hollow shaft motor - that moves the ultrasonic wave generating unit(s) 30 relative to other components of the laser processing head 10, the laser processing head 10 may also comprise a plurality of wave generating units 30 that are activatable independent of each other and that are oriented into different directions. This is schematically illustrated in **Figures 8 and 9****.** One of the ultrasonic wave generating units 30, each comprising at least one ultrasonic generator 31, is active, depending on the desired direction of deflection, whereas other wave generating units 30 are not active. Also in this variant, the laser processing head may be configured for multiple sequential deflections, as illustrated in **Figure 10****.**

Desired dynamic beam shapes can be achieved by choosing the direction of deflection - statically and/or dynamically -, and/or by modulating the parameters of the ultrasonic wave, such as the amplitude, the frequency, and/or the phase.

In many embodiments, a desired deflection is a deflection of the beam in a positive or positive or negative direction with respect to the cutting direction. This is illustrated in **Figure 11****,** showing a positive deflection by a positive offset d (right panel) compared to the situation without any deflection (left panel). In Fig. 11, also the kerf 71 and the cutting direction 72 are illustrated. Fig. 11 also illustrates the fact that the dimensions of the outlet orifice 57 effectively limit the possible deflection. Depending on the chosen parameters, the nozzle 56 (see Fig. 4) will also absorb higher-order deflected radiation.

**Figure 12** schematically shows a dynamic beam shape achievable by the approach according to the invention, without an offset bias (left panel) and with a positive offset (right panel).

**Figure 13** depicts a special set-up in which the laser processing head 10 is oriented relative to the workpiece in a manner that the laser processing beam is not incident approximately vertically and perpendicularly to the workpiece surface but at an angle thereto (for example for bevel cutting). Depending on the cutting direction, this may lead to situations in which the gas flow of the processing gas ejected by the nozzle 56 and the processing laser beam is subject to a drift and aerodynamics may be difficult. The deflection by the approach taught herein may be used for partially or fully compensating for this, in situations in which the laser processing head 10 is leading with respect to the cutting direction, in which it is trailing with respect to the cutting direction, or also if the movement is lateral. A beam displacement in the cutting direction if the laser processing head is leading (as shown in schematically in Fig. 13) has proven to lead to a substantial gas flow improvement leading to a dross reduction and to a potential increase in cutting velocity. If the laser processing head 10 is trailing (not shown in Fig. 13), a slight improvement can be achieved by displacing the beam or opposite to the cutting direction. For a lateral movement of the laser processing head, the gas flow can be improved if the beam is displaced in the cutting and a lateral direction.

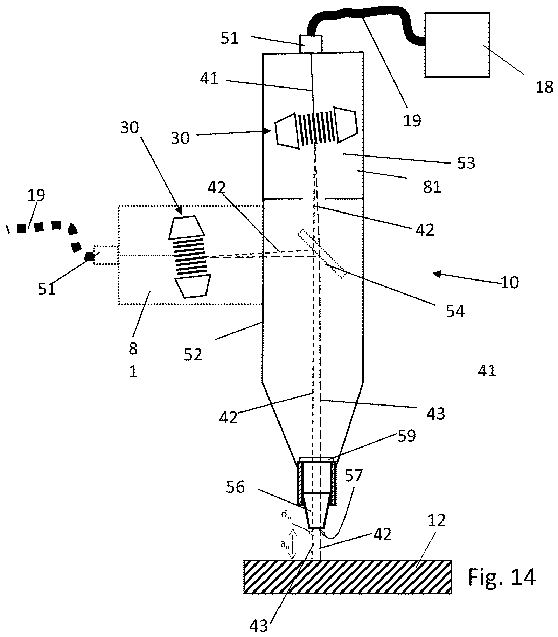

**Figure 14** illustrates the principle that the laser processing head 10 may comprise a deflection module 81 with at least ultrasonic wave generating unit 30, which module may for example be mounted to an outside of a laser processing head casing of for example a state-of-the-art laser processing head instead of the wave generating unit 30 being arranged inside of it. This may have the advantages of making the manufacturing more economical, by using standard components, and/or of having a longer path of the deflected portion 42 between the ultrasonic wave generating unit 30 and the workpiece 12, to yield an enhanced deflection giving a specific achievable deflection angle.

Also in the embodiment of Fig. 14, of course, the laser processing head may be equipped to deflect the laser processing beam into different directions, for example by having a plurality of ultrasonic wave generating units oriented into different directions, and/or by having movable ultrasonic wave generating units. Moreover, also the embodiment of Fig. 14 may have multiple deflections by having a plurality of acoustic wave generating units arranged in sequence.

Fig. 14, like Fig 4 illustrates two options, namely one with the radiation travelling from the input port 51 to the nozzle outlet without any deflection, and thus with the deflection module 81 arranged as an upper part of the laser processing head, and one with a deflection mirror 54 (dotted lines), with the deflection module 81 connected to a side of the housing 52.

As an alternative to being due to an acoustic wave, especially ultrasonic wave, the periodic density modulation may also be created by other means. For example, a regular arrangement of gas injectors may create a regular pattern of higher and lower gas flows, whereby due to the Venturi effect also the density will be subject to an according pattern.

## Claims

1. A laser processing head (10) for a laser processing machine (1), the laser processing head (10) being equipped to emit laser radiation towards a workpiece (12) supported by a workpiece support and to move relative to the workpiece support, the laser processing head comprising an input port (51) for receiving laser radiation from a laser source and an output port for emitting the laser radiation towards the workpiece (12), wherein the laser processing head is equipped to direct the laser radiation from the input port (51) to the output port on a laser beam path, wherein the laser beam path leads through a space (53) filled by a gas **characterized in that** the laser processing head is equipped to cause a periodic density modulation of a density of the gas so as to deflect a portion (42) of the laser beam, and to emit the deflected portion (42) towards the workpiece (12).

2. The laser processing head of claim 1, being equipped to direct a non-deflected portion (43) of the laser beam towards the workpiece (12), together with the deflected portion (42).

3. The laser processing head of claim 1 or 2, comprising an ultrasonic generator (31) to cause an ultrasonic wave (33) generating the periodic density modulation.

4. The laser processing head of claim 3, further comprising an acoustic reflector (32) arranged along a propagation direction of the ultrasonic wave (33) emitted by the ultrasonic wave generator (31), the acoustic reflector (32) oriented to reflect the ultrasonic wave (33) back towards the ultrasonic generator (31) so as to cause a standing ultrasonic wave generating the density modulation.

5. The laser processing head of claim 3, wherein the ultrasonic generator (31) is one of a pair of ultrasonic generators (31), whereby the laser processing head (10) is equipped to generate a standing ultrasonic wave (33) between the ultrasonic generators (31) of the pair to generate the density modulation.

6. The laser processing head of any one of the previous claims, wherein the gas filling the space is one of air, Helium, Neon, Nitrogen gas, Oxygen gas, Carbon dioxide, Argon, a mixture of these.

7. The laser processing head of any one of the previous claims, being equipped to generate, in the gas-filled space traversed by the laser beam, acoustic waves having different directions.

8. The laser processing head of claim 7, comprising at least one acoustic wave generating unit (31) being movable in the laser processing head (10).

9. The laser processing head of claim 8, wherein the at least one movable acoustic wave generating unit (30) is mounted to a hollow shaft motor (61).

10. The laser processing head of any one of the previous claims, comprising a plurality of acoustic wave generating units (30) oriented into different directions, the acoustic wave generating units (30) being selectively activatable.

11. The laser processing head of any one of the previous claims, comprising a plurality of acoustic wave generating units (30) arranged in sequence.

12. A laser processing machine (1), comprising the laser processing head according to any one of the previous claims, a laser source (18), and a workpiece support and being equipped to move the laser processing head (10) relative to the workpiece support while laser radiation is emitted towards a workpiece (12) supported by the workpiece support, the laser processing machine (1) further comprising a machine control (20) equipped and configured to control a movement of the laser processing head (10) relative to the workpiece support, to control an emission of the laser beam (21) by the laser processing head, and to control a generation of the periodic density modulation.

13. The laser processing machine according to claim 13, wherein the laser processing head (10) is equipped to generate, in the gas-filled space traversed by the laser beam, acoustic waves having different directions, and wherein the machine control (20) is equipped and configured to adapt a direction of a generated acoustic wave to a direction of movement of the laser processing head (10) relative to the workpiece.

14. A method of operating the laser processing machine (1) according to claim 12 or 13, comprising the steps of generating the laser beam, directing the laser beam through the gas-filled space, and generating the periodic density modulation in the gas-filled space so that a portion of the laser beam is deflected by the periodic density modulation acting as diffraction grating.
